(19) **Europäisches Patentamt**

**European Patent Office**

**Office européen des brevets**

(11) Veröffentlichungsnummer: **0 393 418 B1**

(12) **EUROPÄISCHE PATENTSCHRIFT**

(45) Veröffentlichungstag der Patentschrift: **02.02.94**

(21) Anmeldenummer: **90106439.4**

(22) Anmeldetag: **04.04.90**

(51) Int. Cl.⁵: **H01M 6/14**, //H01M4/40, H01M4/58,H01M4/62

(54) **Elektrochemische Zelle.**

(30) Priorität: **20.04.89 DE 3912954**

(43) Veröffentlichungstag der Anmeldung:
**24.10.90 Patentblatt 90/43**

(45) Bekanntmachung des Hinweises auf die
Patenterteilung:
**02.02.94 Patentblatt 94/05**

(84) Benannte Vertragsstaaten:
**CH DK FR GB LI**

(56) Entgegenhaltungen:
**EP-A- 0 186 200**
**DE-C- 3 023 970**
**US-A- 4 547 441**

(73) Patentinhaber: **SONNENSCHEIN LITHIUM GMBH**
**Industriestrasse 22**
**D-63654 Büdingen(DE)**

(72) Erfinder: **Eichinger, Günter, Dr., Dipl.-Chem.**
**Im Kastell 3**
**D-6472 Altenstadt(DE)**
Erfinder: **Gabriel, Wolfgang, Dr., Dipl.-Chem.**
**Schlossstrasse 21**
**D-6456 Langenselbold(DE)**

(74) Vertreter: **Baumann, Eduard, Dipl.-Phys.**
**Postfach 12 01**
**D-85632 Höhenkirchen bei München (DE)**

**Beschreibung**

Die Erfindung bezieht sich auf eine elektrochemische Zelle gemäß dem Oberbegriff des Anspruches 1.

Insbesondere bezieht sich die Erfindung auf sogenannte Lithiumzellen, bei denen als Anode Lithium verwendet wird. Lithiumzellen haben in den letzten Jahren erhebliche wirtschaftliche Bedeutung erlangt. Allerdings ist Lithiummetall aufgrund seiner hohen Reaktivität in allen in Frage kommenden Elektrolytlösungen instabil. In Kontakt mit diesen bilden sich schwer lösliche Reaktionsprodukte, die auf der Lithiumoberfläche einen Schutzfilm bilden. Darauf ist die sehr geringe Selbstentladung von Lithiumzellen und dadurch bedingt ihre lange Lagerfähigkeit zurückzuführen.

Einen besonders hohen Energieinhalt, und zwar sowohl gravimetrisch als auch volumetrisch, haben Lithiumzellen, die als Hauptbestandteil des Elektrolyts Thionylchlorid aufweisen, bekannt als Lithium/Thionylchlorid- Zellen. Bei diesen Zellen wirkt der Elektrolyt gleichzeitig als Depolarisator. Auch hier ist jedoch das Lithium thermodynamisch instabil, wobei sich, soweit bekannt, als einziges Reaktionsprodukt Lithiumchlorid als Schutzfilm auf der Lithiumoberfläche niederschlägt. Aus Untersuchungen der Kinetik des Filmwachstums wurde festgestellt, daß eine erhöhte Konzentration von $LiAlCl_4$, das als Leitsalz benutzt wird, ebenso wie eine erhöhte Temperatur zu einer schnelleren Filmbildung führt.

Neben der sehr positiven Auswirkung auf die Lagerfähigkeit von Lithiumzellen hat der erwähnte Schutzfilm allerdings auch eine nachteilige Auswirkung. Diese besteht darin, daß bei höheren Strombelastungen (Größenordungsmäßig 1 mA/cm$^2$ und mehr) zu Beginn der Belastung nicht die volle Spannung der Zelle erreicht wird. Dieser verzögerte Spannungsanstieg, auch "Voltage Delay" genannt, ist von der Chemie der einzelnen Lithiumsysteme abhängig, tritt jedoch im Prinzip in allen Lithiumzellen auf.

In Lithium/Thionylchlorid- Zellen ist der Effekt des verzögerten Spannungsanstiegs ausgeprägter als beispielsweise in Zellen mit organischen Elektrolyten und festen Kathoden. Das tatsächliche Spannungsanstiegsverhalten solcher Zellen ist dabei in sehr komplexer Weise von der Lagerzeit der Zelle, von den dabei vorherrschenden Umgebungstemperaturen und von einer eventuellen Vorbelastung der Zelle abhängig. Um das Spannungsanstiegsverhalten von Lithium/Thionylchlorid- Zellen zu verbessern, wurden viele Versuche unternommen, den Elektrolyten durch Zusätze zu verändern. Beispielsweise werden LiCl und $AlCl_3$ durch $Li_2S$ und $NbCl_5$ ersetzt (siehe z.B. N.A. Fleischer, S.M. Manske und R.J. Ekern, J. Electrochem. Soc. 131 - (1984, 1733). In einer anderen Arbeit wurden ebenfalls die eingesetzten Lewisbasen und -säuren modifiziert. (J. Bressan, G. Feuillade und R. Wiart, J. Electrochem. Soc. 129 (1982), 2649).

Als Lewisbasen wurden dabei $Li_2O$, $Li_2CO_3$, $Li_2S$, LiCl, LiF, $CaCO_3$, CaO, CaS, $CaCl_2$ eingesetzt, als Lewissäuren $AlCl_3$, $SbCl_5$, $TaCl_5$, $NbCl_5$, $WCl_6$, $SiCl_4$, $BCl_3$, $PCl_5$.

Weiterhin wurde vorgeschlagen, $Li_2SO_3$ statt LiCl als Salz in Kombination mit $AlCl_3$ einzusetzen. (M.J. Domeniconi, C.R. Schlaikjer und C.A. Young, GTE, US Pat. 4,403,021).

Desgleichen wurde versucht, LiCl durch $Li_2O$ zu ersetzen (J.P. Gabano in E.B. Yeager et al, (Hrg.), Proc. Workshop on Lithium Nonaqueous Battery Electrochemistry, Electrochem. Soc. Inc., Pennington N.J., 1980, S. 98, sowie DE-Pat. 29 02 526). Beim Einsatz von $Li_2O$ soll sich in situ $SO_2$ bilden, aus dem ein $AlCl_3$ .$SO_2$- Komplex entsteht. Die Stabilität dieses Komplexes ist jedoch so gering, daß er beim Erhitzen leicht zerfällt, wobei das $SO_2$ als Gas entweicht. Somit sind auch Lösungen unter Bildung von Schwefeldioxid $SO_2$ bei Li/$SOCl_2$- Zellen, das die Morphologie des Oberflächenfilms verändert, ebenso wenig befriedigend wie eine direkte Zumischung von Schwefeldioxid zum Elektrolyt, wie es das US- Pat. 4,309,490 vorschlägt. Bei einer Lagerung derartiger Zellen bei höherer Temperatur und anschließender Belastung mit einem hohen Strom zeigt sich sogar eine stärkere Verzögerung des Spannungsanstieges als bei Vergleichszellen ohne einen derartigen Zusatz.

Weitere Vorschläge, einen verzögerten Spannungsanstieg zu vermeiden, bestanden in der Beimischung von Polymer in den Elektrolyt. So soll beispielsweise gemäß DE- Pat. 3023970 ein Vinylpolymer in einer Menge von 0,25 bis 4,0 g/l des Elektrolyten im positiven Elektroden- Elektrolyt gelöst werden.

Dieser Elektrolyt enthält als Leitsalz eine Komplexverbindung aus anorganischen oder organischen Lewissäuren, sowie von ionisier-baren anorganischen Salzen. Als typisches Leitsalz ist $LiAlCl_4$ angegeben. Die beschriebene Zelle hat einen kohlenstoffhaltigen positiven Elektrodenkollektor und einen nichtgewebten Glasfaser-separator.

Gemäß FR- PS 2305863 wird vorgeschlagen, die negative Elektrode direkt mit einer dünnen Schicht aus Vinylpolymer zu versehen. Gemäß US- Pat. 4,366,616 soll die Anode mit einer Flüssigkeit in Form eines Cyanacrylat überzogen werden, die einen entsprechenden Film bildet.

Derartige Polymerüberzüge der Anode zeigen insbesondere bei Raumtemperaturlagerung und -prüfung einen gewissen positiven Effekt auf den Spannungsanstieg bei plötzlicher höherer Belastung, diese Wirkung läßt jedoch insbesondere bei höheren Temperaturen und längeren Lagerzeiten deutlich nach. Besonders bei Zellen, die bei höheren Temperaturen gelagert und anschließend mit etwa 1 mA/cm$^2$ oder darüber

belastet werden, zeigt sich zu Beginn der Belastung wenigstens ein kurzzeitiger Spannungsabfall. Für eine Reihe von Anwendungen ist jedoch ein derartiger Spannungsabfall nicht tragbar.

Im US- Patent 4,547,441 wird beschrieben, daß $SO_3$ bzw. Substanzen, die $SO_3$ abspalten können, wie $HSO_3Cl$ und $H_2SO_4$, eine positive Wirkung auf den Spannungsanstieg haben sollen. Dieser positive Effekt ist je doch nur sehr geringfügig.

Zur Kapazitätserhöhung kann einer derartigen elektrochemischen Zelle $S_2Cl_2$ zugegeben werden, eine geringe Zugabe von $BrCl_2$ oder $Cl_2$ kann die Sicherheit von hochbelastbaren Wickelzellen mit Thionylchlorid oder Sulfurylchlorid verbessern. Schließlich kann sich durch geringe Zugaben von Katalysatoren wie Phthalocyanin, Hämin oder anderen katalytisch wirkenden Metallkomplexen die Strombelastbarkeit erhöhen.

Das Problem der Erfindung besteht darin, bei einer elektrochemischen Zelle gemäß dem Oberbegriff des Anspruches 1 insbesondere auch bei höheren Temperaturen einschließlich höheren Lagerungstemperaturen und längeren Lagerungszeiten einen Spannungsabfall oder einen verzögerten Spannungsanstieg zu Beginn der Strom-Belastung, insbesondere bei Inbetriebnahme, zu vermeiden.

Das Problem wird erfindungsgemäß durch die Merkmale des Kennzeichens des Anspruches 1 gelöst. Weitere Ausgestaltungen der Erfindung sind in den Unteransprüchen unter Schutz gestellt.

Das Grundprinzip besteht darin, daß dem Elektrolyt zusätzlich zum Polymer, das entweder im Elektrolyt gelöst ist, die Anode, die Separatoren etc. überzieht, oder als Bindemittel in Separatoren eingesetzt ist, Protonen liefernde Substanzen, vorzugsweise Mineralsäuren, in niedrigen Konzentrationen zugefügt werde. Es stellte sich heraus, daß ein derartiger Säurezusatz auch bereits ohne Polymer eine positive Auswirkung auf den Spannungsanstieg speziell von $Li/SOCl_2$- Zellen aufweist. Eine überraschend starke günstige Auswirkung hat jedoch die Kombination dieser Säuren mit Polymer, insbesondere mit Polymethylmethacrylat (PMMA).

Während man bisher davon ausging, derartige elektrochemische Zellen müßten ohne Protonen liefernde Substanzen hergestellt werden, da diese Protonen vom Lithium sehr bald zu Wasserstoff umgesetzt würden, stellte sich überraschenderweise heraus, daß eine derartige Zugabe selbst bei längerer Lagerzeit einen günstigen Effekt auf den Spannungsabfall zu Beginn einer Belastung hat. Besonders wirksam ist hierbei die indirekte Erzeugung von Protonen liefernden Mineralsäuren durch Reaktion von Wasser mit dem flüssigen Depolarisator, und zwar bei gleichzeitiger Verwendung polymerer Stoffe. Die Reaktion von Wasser mit Thionylchlorid stellt sich dabei wie folgt dar:

$$H_2O + SOCl_2 = SO_2 + 2HCl.$$

Im folgenden sind Ausführungsbeispiele der Erfindung in Form von Tabellen und Beschreibungen dargestellt. Es zeigt:

Beispiel 1 die Wirkung des Säurezusatzes im Vergleich zu einer Kombination von Säurezusatz und Polymer,

Beispiel 2 im wesentlichen ähnliche Verhältnisse wie im Beispiel 1, wobei jedoch anstelle eines Ethylen-Tetrafluorethylen, abgekürzt ETFE, ein nicht gewebtes Glasfaservlies eingesetzt wurde,

Beispiel 3 ähnliche Verhältnisse wie bei Beispiel 2, wobei jedoch im Unterschied zum Beispiel 2 kein $SO_3$ enthalten ist.

Beispiel 1:

Einem Thionylchlorid- Elektrolyten, bestehend aus dem als Depolarisator wirkenden Thionylchlorid und dem Leitsalz Lithiumtetrachloroaluminat in 1,2 M Konzentration, wurde Chlorsulfonsäure, neuerdings als Chloroschwefelsäure bezeichnet, Formel $HSO_3Cl$, (wasserfrei) in einer Konzentration von 1 Gew.-% zugegeben. Dieser Elektrolyt wurde in Zellen gefüllt, die so aufgebaut sind, daß Lithiumfolie an die Innenseite eines Zellbechers gewalzt wird, ein Separator eingeführt wird und dann eine sog. Puppenkathode, bestehend aus einem hochporösen Kohlenstoffkörper, eingeschoben wird.

In diesen Kathodenkörper wird ein als Stromableiter dienender Metallstift eingeschoben, der im Deckel der Zelle in Glas eingeschmolzen ist. Dieser Stromableiter stellt den Pluspol der Zelle dar, während der ganze Becher und der restliche Deckel den Minuspol darstellen. Becher und Deckel sind hermetisch dicht miteinander verschweißt. Der Elektrolyt wird duch ein Fülloch im Deckel eingefüllt, das anschließend durch Aufschweißen einer Stahlkugel verschlossen wird. Die Versuchszellen hatten gemäß DIN IEC 86, Teil 2, die Baugröße 1/2AA (entspricht 1/2 R 6). Als Separator wurde eine poröse Folie aus ETFE, Ethylen-Tetrafluorethylen, abgekürzt ETFE, verwendet.

Nach definierten Lagerzeiten wurden die Zellen mit 330 Ohm belastet. Das entspricht einer Stromdichte von etwa 1 mA/cm$^2$, bezogen auf die Lithiumoberfläche.

Ergebnisse:

| Lagerzeit (bei Raumtemp.) | Elektrolyt | Zellspannung (V) an 330 Ohm (Mittelwert aus 3 Werten mit Standardabweichung) |
|---|---|---|
| 1 Woche | kein Zusatz | 3,32 ± 0,04 |
| 3 Monate | " | 2,28 ± 0,47 |
| 1 Woche | + 1 % HSO$_3$Cl | 2,65 ± 0,35 |
| 3 Monate | " | 2,81 ± 0,39 |
| 6 Wochen | + 1 % HSO$_3$Cl + 2,35g/l PMMA | 3,37 ± 0,01 |
| 3 Monate | " " | 3,38 ± 0,03 |

Bei üblichen Zellen ohne jeglichen Zusatz wurden nach einer Woche Lagerzeit bei Raumtemperatur 3,32 ± 0,04 V gemessen, dieser Wert sank nach drei Lagerung deutlich auf 2,28 ± 0,47 V ab. Der Spannungswert bei Zusatz von Säure lag nach einer Woche mit 2,65 ± 0,35 V, wobei 3 Zellen gemessen wurden, unter demjenigen Wert, der ohne jegliche Zusätze erzielt wurde. Nach drei Monaten Lagerung zeigte sich jedoch mit einem Wert von 2,81 ± 0,39 V gegenüber einem Wert von 2,28 V ohne Zusätze eine deutliche Verbesserung. Eine gravierende Verbesserung wurde bei einer Kombination von Säure und Polymer in Form von PMMA oder Polymethylmethacrylat erzielt. Hier lagen die niedrigsten Spannungswerte nach sechs Wochen Lagerung bei Raumtemperatur noch bei 3,37 ± 0,01 V, nach drei Monaten Lagerung bei 3,38 ± 0,03 V. Somit zeigte sich eine deutliche Verbesserung, darüber hinaus auch eine erheblich geringere Abweichung vom gemessenen Mittelwert.

2. Beispiel

Hier wurde lediglich anstatt eines ETFE- Separators ein nichtgewebtes Glasfaservlies verwendet, im übrigen wurden die gleichen Versuchsbedingungen wie im Beispiel 1 eingehalten.

Ergebnisse:

| Lagerzeit (bei Raumtemperatur) | Elektrolyt | Zellspannung (V) an 330 Ohm (Mittelwert aus 3 Werten mit Standardabweichung) |
|---|---|---|
| 3 Monate | 1 % HSO$_3$Cl | 3,34 ± 0,3 |
| 3 Monate | kein Zusatz | 2,28 ± 0,47. |

Während sich bei der gemessenen Zellspannung bei Verwendung eines Elektrolyt ohne Zusätze gegenüber dem Beispiel 1 keinerlei Unterschied ergab, wurde für den Elektrolyt mit Zusatz von Chloroschwefelsäure eine deutliche Erhöhung der Zellspannung festgestellt. Dies ist wohl darauf zurückzuführen, daß der verwendete Glasfaserseparator mindestens etwa 5 Gew.-% PMMA-Polymer als Bindemittel enthielt. Dieses Polymer kann somit die Rolle eines sonst dem Elektrolyt zugesetzten Polymers übernehmen. Dieses Polymer wird aus dem Separator herausgelöst und kann dann zusammen mit dem Säurezusatz die gewünschte Wirkung auf die Lithiumoberfläche entfalten. Die deutliche Verbesserung des Ergebnisses gegenüber der Verwendung eines Separators ohne Polymerzusatz bestätigt im übrigen die überraschende Kombinationswirkung von Säure und Polymer in einer elektrochemischen Zelle der eingangs erwähnten Art, insbesondere in einer Lithium/Thionylchlorid- Zelle.

4

Beispiel 3:

Auch hier wird Glasfaservlies mit einem Polymerbindemittel PMMA wie in Beispiel 2 eingesetzt. Statt Chloroschwefelsäure wird jedoch HCl verwendet.

Ergebnisse:

| a) mit Glasfaservlies-Separator: | | |
|---|---|---|
| Lagerzeit (bei Raumtemp.) | Elektrolyt | Zellspannung (V) an 330 Ohm (Mittelwert aus 3 Werten mit Standardabweichung) |
| 1 Monat | 1 % HCl | 3,06 ± 0,14 |
| 1 Monat | kein Zusatz | 2,93 ± 0,05 |

| b) Kontrollversuch mit ETFE-Separator (ohne Polymer): | | |
|---|---|---|
| Lagerzeit (bei Raumtemp.) | Elektrolyt | Zellspannung (V) an 330 Ohm (Mittelwert aus 3 Werten mit Standardabweichung) |
| 1 Monat | 1 % HCl | 1,66 ± 0,18 |
|  | 1 % HCl + 2,35 g/l PMMA | 3,24 ± 0,11 |
| 1 Monat | kein Zusatz | 2,32 ± 0,14. |

Es zeigt sich, daß auch in diesem Falle der Glasfaserseparator bessere Ergebnisse bringt, was auf den Polymerzusatz zurückgeführt wird. Generell hat eine Kombination von Säurezusatz und Polymerzusatz einen positiven Einfluß auf den Spannungsanstieg von $Li/SOCl_2$- Zellen bei höherer Belastung. Das Polymer kann dabei bereits als Bindemittel oder in anderer Form in einen Separator eingesetzt werden, oder beispielsweise in Pulverform dem Elektrolyten zugegeben werden, wo es gelöst wird.

Auch andere Säuren und andere Polymere wurden untersucht und zeigen ähnliche günstige Ergebnisse. Die günstige Wirkung dieser kombinierten Zusätze bleibt auch nach vielen Monaten Lagerzeit bei Raumtemperatur ohne wesentliche Änderung erhalten. Die Selbstentladung derartiger $Li/SOCl_2$- Zellen mit solchen Zusätzen liegt nach mikrokalorimetrischen Messungen unter wenigen Prozent der Gesamtkapazität für ein Jahr Lagerzeit. Besonders günstige Ergebnisse gegenüber den bekannten elektrochemischen Zellen ergeben sich bei höheren Lagertemperaturen und Betriebstemperaturen bis zu etwa 70°C, sowie nach langen Lagerungszeiten.

**Patentansprüche**

1. Elektrochemische Zelle mit einer Leichtmetallanode, einer porösen Kohlenstoff- oder Metallkathode, einem Elektrolyt in Form eines nichtwässrigen, anorganischen Lösungsmittels, wobei das Lösungsmittel oder ein Lösungsmittelzusatz die Funktion des Depolarisators übernimmt, der an der Kathode, die selbst chemisch unverändert bleibt, chemisch umgesetzt wird und aus einer Oxi- Verbindung oder Oxihalogenid- Verbindung aus der V. und/oder VI. Hauptgruppe des Periodensystems der Elemente besteht, vorzugsweise mit einem Leitfähigkeitszusatz zur Erhöhung der elektrischen Leitfähigkeit des Elektrolyten, sowie gegebenenfalls weiteren Zusätzen zu diesem Elektrolyten wie $S_2Cl_2$, BrCl, $Cl_2$, oder von Katalysatoren, sowie mit einem Polymer,
   dadurch gekennzeichnet,
      a) daß der Elektrolyt eine protische Säure wie HCl, HBr, HJ, $HBF_4$, $HSO_3Cl$, $HNO_3$, $H_2SO_4$, oder ein Gemisch aus zwei oder mehreren dieser Säuren zu einem Anteil zwischen 0,01 und 10 Gew.-% enthält,
      b) daß das Polymer im Elektrolyt zu einem Anteil zwischen 0,01 bis 10 Gew.-% gelöst ist.

2. Zelle nach Anspruch 1, dadurch gekennzeichnet, daß der Anteil der protischen Säure 0,1 bis 3 Gew.-% beträgt.

**3.** Zelle nach Anspruch 1 oder 2, dadurch gekennzeichnet, daß der Elektrolyt zusätzlich Wasser oder Hydrolyseprodukte von Wasser in einer Konzentration zwischen 0,01 bis 5 Gew.-% enthält.

**4.** Zelle nach einem der Ansprüche 1 bis 3, dadurch gekennzeichnet, daß das Polymer ein Acryl- oder Acrylesterpolymer, insbesondere Polymethylmetacrylat oder Cyanacrylat, ein Vinyl- oder Vinylidenpolymer, insbesondere Polyvinylpyrrolidon oder Polyvinylchlorid, ein Polyolefin, insbesondere Polyethylen oder Polypropylen, ein Polymer aus der Gruppe der Polyester oder Polyurethane, ein Siliconpolymer, Polypyrrol, Polythiophen oder Polyanilin oder ein Copolymer aus einer oder mehreren dieser Gruppen ist.

**5.** Zelle nach einem der Ansprüche 1 bis 4, dadurch gekennzeichnet, daß der Elektrolyt zusätzlich Schwefeldioxid in einer Menge zwischen 0,1 bis 10 Gew.-% enthält.

**6.** Zelle nach einem der Ansprüche 1 bis 5, dadurch gekennzeichnet, daß als Anode Lithium und als Elektrolyt Thionylchlorid eingesetzt wird.

**7.** Zelle nach einem der Ansprüche 1 bis 6, dadurch gekennzeichnet, daß als Elektrolyt Sulfurylchlorid oder ein Gemisch aus Thionylchlorid und Sulfurylchlorid mit einem Anteil von Thionylchlorid zwischen 5 und 95 Gew.-%, vorzugsweise von 50 Gew.-%, eingesetzt wird.

**8.** Zelle nach einem der Ansprüche 1 bis 7, dadurch gekennzeichnet, daß der Säuregehalt 0,5 bis 1,5 Gew.-% und der Polymergehalt 0,1 bis 0,2 Gew.-% des Elektrolyten beträgt.

**9.** Zelle nach einem der Ansprüche 1 bis 8, dadurch gekennzeichnet, daß das Leitsalz Lithiumtetrachloroaluminat (LiAlCl$_4$) ist und die Kathode aus einem durch Polytetrafluoräthylen gebundenen Acetylenruß besteht.

**10.** Zelle nach einem der Ansprüche 1 bis 9, dadurch gekennzeichnet, daß der Polymer- Zusatz auf Bauteile der Batterie, wie Lithiumoberfläche, Separator, Kathode aufgebracht oder in diesen Bauteilen enthalten ist.

**11.** Zelle nach einem der Ansprüche 1 bis 10, dadurch gekennzeichnet, daß die Säure oder Säuren durch Hinzufügen verschiedener Komponenten zum Elektrolyt durch chemische Reaktionen derselben in situ, d.h. nach Vermischen dieser Komponenten, erzeugt ist.

**Claims**

**1.** Electrochemical cell with a light metal anode, a porous carbon or metal cathode, an electrolyte in the form of an anhydrous, anorganic solvent, whereby the solvent or a solvent admixture takes the function of the depolarisator which is chemically converted at the cathode which itself remains chemically unchanged and of an oxy-compound or oxyhalogenated hydrocarbon compound of the main group V and/or VI of the classification of elements, preferably with a conductivity addition to increase the electrical conductivity of the electrolyte as well as further admixtures to this electrolyte like $S_2Cl_2$, BrCl, $Cl_2$ or of catalysts as well as with a polymer,
**characterized in that**
   a) the electrolyte comprises a protic acid such as HCl, HBr, HJ, HBF$_4$, HSO$_3$Cl, HNO$_3$, H$_2$SO$_4$ or a mixture of two or more of these acids at a portion of between 0.01 and 10 weight percent,
   b) that the polymer in the electrolyte is dissolved at a portion between 0.01 and 10 weight percent.

**2.** Cell according to claim 1, **characterized in that** the portion of protic acid is 0.1 to 3 weight percent.

**3.** Cell according to claims 1 or 2, **characterized in that** the electrolyte additionally contains water or hydrolysis products of water in a concentration between 0.01 and 5 weight percent.

**4.** Cell according to one of the claims 1 to 3, **characterized in that** the polymer is an acryl or acrylester polymer, particularly polymethyl methacrylate or cyanacrylate, a vinyl or vinylidene polymer, particularly polyvinylpyrrolidone or polyvinylchloride, a polyolefine, particularly polyethylene or polypropylene, a polymer of the group of polyester or polyurethane, a silicone polymer, polypyrrol, polythiophene or polyaniline or a copolymer of one or more of these groups.

5.  Cell according to one of the claims 1 to 4, **characterized in that** the electrolyte additionally contains sulphur dioxide in a quantity between 0.1 and 10 weight percent.

6.  Cell according to one of the claims 1 to 5, **characterized in that** the lithium is used as the anode and thionyl chloride as the electrolyte.

7.  Cell according to one of the claims 1 to 6, **characterized in that** the sulphuryl chloride or a mixture of thionyl chloride and sulphuryl chloride with a portion of thionyl chloride of between 5 and 95 weight percent, preferably of 50 weight percent is used as electrolyte.

8.  Cell according to one of the claims 1 to 7, **characterized in that** the acid content is 0.5 to 1.5 weight percent and the polymer content is 0.1 to 0.2 weight percent of the electrolyte.

9.  Cell according to one of the claims 1 to 8, **characterized in that** the conducting salt is lithium tetrachloroaluminate ($LiAlCl_4$) and the cathode consists of acetylene black bound by polytetrafluoroethylene.

10. Cell according to one of the claims 1 to 9, **characterized in that** the polymer admixture is applied to the components of the battery such as lithium surface, separator, cathode or is contained in these components.

11. Cell according to one of the claims 1 to 10, **characterized in that** the acid or the acids are produced by admixing different components to the electrolyte by chemical reaction of these components in situ, i.e. after mixing of these components.

## Revendications

1.  Cellule électrochimique comprenant une anode en métal léger, un cathode poreuse en carbone ou en métal, un électrolyte en forme de solvant nonaqueux anorganique, ce solvant ou un additif au solvant, faisant fonction de dépolarisant, étant transformé chimiquement sur la cathode restant elle-même inchangée, ledit solvant étant constitué par un composé oxi ou hydrocarbure oxihalogéné du groupe principal V. ou VI. de la classification périodique des éléments, de préférence avec un additif destiné à augmenter la conductibilité électrique de l'électrolyte et le cas échéant d'autres additifs à cet électrolyte tels que le $S_2Cl_2$, le BrCl, le $Cl_2$, ou des catalyseurs, ainsi que d'un polymére, caractérisée en ce que
    a) l'électrolyte contient un acide protique comme le HCl, le HBr, le HJ, $HBF_4$, le $HSO_3$ Cl, le $HNO_3$, le $H_2SO_4$ ou un mélange de deux ou plusieurs de ces acides dans une proportion comprise entre 0,01 et 10 % en poids,
    b) que le polymère est dissout dans l'électrolyte dans une proportion comprise entre 0,01 et 10 % en poids.

2.  Cellule selon la revendication 1, caractérisée en ce que la part de l'acide protique est comprise entre 0,1 et 3 % en poids.

3.  Cellule selon la revendication 1 ou 2, caractérisée en ce que l'électrolyte contient en plus de l'eau ou des produits provenant de l'hydrolyse de l'eau à raison d'une concentration comprise entre 0,01 et 5 % en poids.

4.  Cellule selon l'une des revendications 1 à 3, caractérisée en ce que le polymère est un polymère acrylique ou un polymère d'ester acrylique, en particulier le polyméthacrylate de méthyle ou le cyanacrylate, un polymère vinylique ou vinylidique, en particulier le pyrolidone de polyvinyle ou le chlorure de polyvinyle, une polyoléfine, en particulier le polyéthylène ou le polypropylène, un polymère du groupe des polyesters ou des polyuréthanes, un polymère de silicone, le polypyrole, le polythiophène ou le polyaniline ou un copolymère de l'un ou de plusieurs de ces groupes.

**5.** Cellule selon l'une des revendications 1 à 4, caractérisée en ce que l'électrolyte contient en plus du dioxyde de sulfure dans une proportion de 0,1 à 10 % en poids.

**6.** Cellule selon l'une des revendications 1 à 5, caractérisée en ce que l'anode est en lithium et la cathode en chlorure de thionyle.

**7.** Cellule selon l'une des revendications 1 à 6, caractérisée en ce que l'électrolyte est du chlorure de sulfuryle ou un mélange de chlorure de thionyle et de chlorure de sulfuryle avec une proportion de chlorure de thionyle comprise entre 5 et 95 % en poids, de préférence de 50 % en poids.

**8.** Cellule selon l'une des revendications 1 à 7, caractérisée en ce que la teneur d'acide est comprise entre 0,5 et 1,5 % en poids et la teneur en polymère entre 0,1 et 0,2 % en poids de l'électrolyte.

**9.** Cellule selon l'une des revendications 1 à 8, caractérisée en ce que le sel conducteur est le tétrachloraluminate de lithium $LiAlCl_4$ et la cathode est constituée de noir d'acétylène lié par du polytétrafluoréthylène.

**10.** Cellule selon l'une des revendications 1 à 9, caractérisée en ce que l'additif de polymère est appliqué sur des parties de la cellule comme la surface de lithium, le séparateur ou la cathode ou est contenu dans ces parties.

**11.** Cellule selon l'une des revendications 1 à 10, caractérisée en ce que l'acide ou les acides sont produits par une réaction chimique in situ suite à l'addition, c.à.d. au mélange de différents composants à l'électrolyte.